(19) Europäisches Patentamt
European Patent Office
Office européen des brevets

(11) **EP 4 250 112 A1**

(12) # EUROPEAN PATENT APPLICATION

(43) Date of publication:
**27.09.2023  Bulletin 2023/39**

(21) Application number: **22167296.7**

(22) Date of filing: **08.04.2022**

(51) International Patent Classification (IPC):
*G06F 9/50* *(2006.01)*

(52) Cooperative Patent Classification (CPC):
**G06F 9/5066**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **24.03.2022  PT 2022117875**

(71) Applicant: **Universidade Da Beira Interior 6201-001 Covilhã (PT)**

(72) Inventors:
• **BARBOSA DE ALMEIDA ALEXANDRE, LUÍS FILIPE**
**6201-001 COVILHÃ (PT)**
• **ALIREZAZADEH, SAEID**
**6200-284 COVILHÃ (PT)**

(74) Representative: **Monteiro Alves, Inês Alameda Dos Oceanos, Nº 41K-21 Parque das Nações 1990-207 Lisboa (PT)**

(54) **COMPUTER-IMPLEMENTED METHOD OF OPTIMAL AND SECURE ALGORITHM ALLOCATION TO PROCESSING UNITS, ASSOCIATED COMPUTER PROGRAM, AND COMPUTER-READABLE DATA CARRIER THEREOF**

(57)    The computer-implemented method of optimal and secure algorithm allocation to processing units is designed to collect specifications about a networked robotic cloud system before implementation, and shows the optimal solution for algorithm allocation. The optimal solution is obtained by minimizing both the overall time and the maximum memory usage by robots. Accordingly, minimizing the overall time will maximize the profits, and minimizing the maximum memory usage by robots will minimize the costs. The computer-implemented method is primarily designed to obtain the optimal performance among all possible algorithm allocation for an existing networked robotic cloud system where robots have limited storage.

**Description**

**TECHNICAL FIELD**

The present invention refers to a computer-implemented method of optimal and secure algorithm allocation to processing units in a networked robotic cloud system.

**BACKGROUND ART**

In the past few decades, the use of robots is increasing in daily human life. Some of the applications are logistics, healthcare, mining, agriculture, construction, industry, and more. Since a task may be beyond the capacity of a single robot, robotic networks are used to overcome this problem. In a robotic network, robots can cooperate with each other to jointly perform a common task.

When a robot needs the output of an algorithm, it either executes the algorithm or sends a request for the output by communicating with other processing units via a wireless local area network (WLAN), a cable, Bluetooth, or other communication methods. The processing units can be any device with computing power that can communicate with the robot, such as a server, a laptop, a cell phone, or a personal computer. Processing units are based on various factors such as proximity to the robot and computing power, and are classified as an edge according to prior art reference [17], a dew according to prior art reference [4], a fog according to prior art reference [3], and a cloud according to prior art reference [7]. The term intermediate processing unit and storage is used to distinguish robots from fog and cloud servers.

For a robot to perform a task, several algorithms must be executed, sometimes, simultaneously. The algorithms can be executed either on the robot itself or, if desired, on a cloud infrastructure or an intermediate processing unit. Depending on the decisions on where to execute the algorithms, the overall execution time and memory required for the robot will change accordingly. In a multi-robot system, the set of all tasks that can be performed by the system, $T$, is finite. At each instant, the system is performing a set of tasks, $T_1$, which is a subset of the set of all tasks. At the same time, a new set of tasks, $T_2$, arrives to be performed by the system. Over time, this process repeats itself. There are two types of task allocation:

- a dynamic allocation answers the question of how to achieve the optimal performance of the system by dynamically allocating tasks in the sequence of the sets of arrived tasks by time $(T_i)_{i \in \mathbb{N}}$.
- a static allocation answers the question of how to achieve the optimal performance of the system by allocating the algorithms of the tasks in the set of all tasks, $T$.

A static allocation provides the minimum cost of the system after all tasks are performed, while a dynamic allocation provides the minimum cost of the system in the time horizon. Moreover, the minimum cost obtained by static allocation is the greatest lower bound for the minimum cost obtained by dynamic allocation.

Static allocation can be considered as the primary evaluation of a cloud robotic system, considering that a solution resulting from static allocation provides an optimal way to distribute the algorithms required to perform all tasks among the nodes of the cloud robotic system, in the sense that all inputs required to execute an algorithm are available to the node to which the algorithm is assigned in the fastest way. This ensures that, in a dynamic allocation, a node assigned to a task gathers all the required information in an optimal way. In other words, static allocation is not only as important as dynamic allocation, but also shows how to achieve the optimal performance of cloud robotic systems when performing any task.

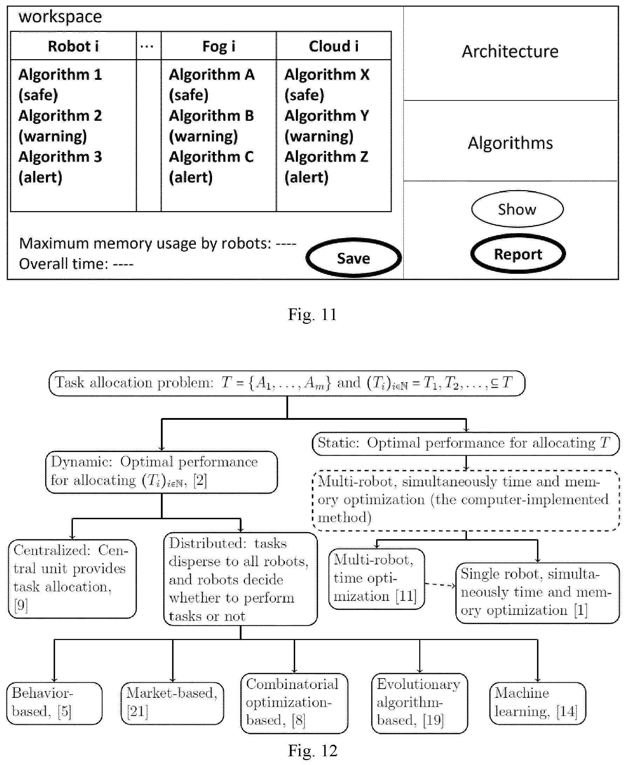

The optimal performance of a networked robotic cloud system can be evaluated with minimizing simultaneously the overall time and maximum memory usage by robots. Finding the optimal performance depends not only on how powerful are the robots and the processors and how fast are the data transmission but also on algorithm allocation. By knowing the optimal algorithm allocation the minimum specifications required by robots to perform the tasks can be obtained. By knowing the optimal algorithm allocation before implementing a networked robotic cloud system, we can examine the performance of several available robots. Then after making a comparison, we can decide which are the most suitable ones. The figure 12 illustrates an overview of task allocation methods revealed in several references of the prior art, wherein the numbers between brackets refers to the prior art documents in the citation list of this description.

**SUMMARY OF INVENTION**

In a first aspect, the present invention refers to a computer-implemented method of optimal and secure algorithm allocation to processing units comprising the following steps:

a) feeding a graph representing a cloud robotic network architecture comprising processing units and data transfer links;

b) feeding the specifications of a plurality of processing units, wherein said processing units are selected from a group comprising a node in the edge, a node in the cloud, an intermediate node or a node in the fog;

c) feeding the specifications of a data transfer speed between each processing unit;

d) feeding the specifications of a plurality of demanded algorithms and their dependencies;

e) construction of a graph representing algorithms and their sequence;

f) finding a set of all execution flows (paths);

g) definition of a Mixed Integer Nonlinear Programming (MINLP) optimization problem in which the objective function measures the overall operation performance respecting the execution of all demanded algorithm, the algorithm dependencies, the process unit specifications, and the data transferring time;

h) feeding an initial estimate of a mapping between algorithms and processing units;

i) executing a method to solve the optimization problem defined in step g;

j) reporting an optimal mapping between algorithms and processing units;

k) reporting robotic network key performance indexes;

l) reporting security issues/highlights.

The present invention, in a second aspect, refers to a computer program, which comprises instructions which, when the program is executed by a computer, cause the computer to carry out the steps of the method defined in the first aspect of the invention.

The present invention, in a third aspect, refers to a computer-readable data carrier having stored thereon the computer program, as defined in the second aspect of the invention.

TECHNICAL PROBLEM

In static task assignment, as revealed in prior art reference [12], it is studied a static algorithm allocation for a multirobot system without considering cloud infrastructure and communication times. As far as we know, the only works that have addressed a similar problem are described in prior art references [11], and [1]. Alirezazadeh and Alexandre in prior art reference [1] solved the allocation problem by minimizing memory and time for a single robotic cloud system. Li et al. in prior art reference [11] approached the assignment problem by considering only the minimum time and ignoring the memory parameter, and by minimizing the total execution time without fully considering communications.

As shown in Figure 12, dynamic task assignment is divided into centralized and distributed assignment. In centralized methods, a central planning unit that has information about the entire environment handles task assignment, as described in prior art reference [9]. In distributed assignment, instead of a central unit, all tasks are distributed to all robots, and robots decide which tasks to perform without central coordination. Five main approaches have been used for distributed assignment:

- behavior-based: uses problem features to decide whether or not a robot should consider a task, as described in prior art reference [5];
- market-based: relies on an auction-based mechanism, as described in prior art reference [21];
- combinatorial optimization-based: transforms the problems into combinatorial optimization problems and uses an appropriate existing technique to solve them, as described in prior art reference [8];
- evolutionary algorithm-based: uses evolutionary operators on the space of solutions, as described in prior art references [19].
- machine learning algorithm: uses a machine learning algorithm to find an optimal task assignment, as described in prior art references [14].

For task allocation in a cloud robotic system, most studies only move computationally intensive tasks to the cloud without considering the communication time between robots and the cloud infrastructure, as described in prior art reference [10].

Dynamic task assignment has been widely studied. The most recent works are: [5] that proposed an algorithm to optimize the latency, energy consumption, and computational cost considering the characteristics of cloud robotic architecture, task properties, and quality of service problems for cloud robotics; [9] presented a centralized algorithm, called "Tercio", for task allocation by minimizing latency and physical proximity to tasks; [21] studied real-time resource allocation based on the hierarchical auction-based method; [16] proposed a method for centralized dynamic task allocation based on modeling the problem as a non-deterministic finite automaton, and a minimum cost solution is presented depending on the energy level of the robots; [22] proposed a method to handle the deadline of a task and also minimize the total cost; [6] studied task allocation under the assumption that the number of robots changes and the tasks are changeable; [20] studied the optimal task assignment for the case where two collaborative robot teams jointly perform some complex tasks, and provided the formulation of the optimization statement of their model based on set-theoretic parameters; [2] translated the optimal task assignment into finding the maximum volume of a subspace of a hyperspace. They investigated the compatibility of a node to perform a task, communication and communication instability, and the capability of fog, cloud, and robots; [14] proposed a scheduling method to minimize the makespan and response time and increase resource efficiency in a cloud infrastructure. The scheduling method is based on reinforcement learning. At each time step, the size of the occupied buffer and total task length of virtual machines are considered independent to use Bayes' theorem, and the Q-values are estimated; [8] developed a method for simultaneously minimizing resource usage, time, and cost, and performing load balancing in a cloud infrastructure. The method consists of formulating all the objectives, and using the hybrid angle strategy [18] to find the optimal solution; [15] proposed a mathematical model for joint offloading of multiple tasks that takes into account the dependencies between the subtasks and schedules the network flows in such a way that the completion time of the tasks is minimized. The network flow dependencies are the problem in offloading tasks to multiple devices, leading to competition for bandwidth usage. In the proposed model, the problem is translated into an optimization problem and a solution called Joint Dependent Task Offloading and Flow Scheduling Heuristic (JDOFH) is proposed.

Cloud robotics allows robots to benefit the massive storage and computational power of the cloud. It will be more profitable if robots complete their tasks faster. At the same time using more advanced robots will increase the costs. So, there is a need to design a computer-implemented method that can maximize the profits and minimize the costs by providing optimal performance will be of most interest for all of the applications of robotic systems. The computer-implemented method is for solving static allocation in cloud robotic systems to simultaneously minimize the time required to execute each algorithm and the memory required by all robots to complete all tasks. As mentioned previously, most studies move only the computationally intensive tasks to the cloud without considering the communication time. Moreover, all dynamic task allocation studies assign each task to a node depending on the set of newly arrived tasks, and the node completes the task by communicating with other nodes. Thus, any task can be assigned to any node, and due to the different communication times between nodes, we need to ensure that the algorithms required to perform all tasks are optimally distributed among the nodes of the cloud robotic system, in the sense that all the inputs required to execute an algorithm are available to the node to which the algorithm is assigned in the fastest way. The advantages of the computer-implemented method over the method in [11] are the full consideration of communication times, the consideration of intermediate processing units instead of only the robots and the cloud infrastructure, and the minimization of memory usage by the robots. The advantages of the computer-implemented method over the method in [1] are considering intermediate processing units in addition to the robots, fog servers, and cloud infrastructure, and providing solutions for systems with multiple robots instead of a single robot.

## SOLUTION TO PROBLEMS

The computer-implemented method of optimal and secure algorithm allocation to processing units, according to the invention, method provides a solution for static algorithm allocation.

The computer-implemented method is designed to collect necessary information about a networked robotic cloud system before implementation, and shows the optimal solution for algorithm allocation. The optimal solution is obtained by minimizing both the overall time and the maximum memory usage by robots. Accordingly, minimizing the overall time will maximize the profits, and minimizing the maximum memory usage by robots will minimize the costs. The computer-implemented method is primarily designed to obtain the optimal performance among all possible algorithm allocation for an existing networked robotic cloud system where robots have limited storage. We invented the method to find the optimal algorithm allocation in a networked robotic cloud system and the computer-implemented method is using that method to find their optimal performance.

Given a set of tasks that an agent can perform, the Mixed-Integer Nonlinear Programming (MINLP) problem is solved recursively to minimize the cost.

The method according to the present invention has a step comprising a of definition of a Mixed Integer Nonlinear Programming (MINLP) optimization problem, wherein the MINLP problem is solved by minimizing the completion time of all tasks and the memory usage by all robots. Step 1) of claim 1 reports the possible security issues.

## ADVANTAGEOUS EFFECTS OF INVENTION

Robots have limited capabilities. The goal is to maximize their performance by offloading some of their computations to the cloud or to an intermediate processing unit, rather than having the robots fully perform all the necessary computations. This allows for the use of cheaper robots, and gets the tasks done faster. This makes it also cheaper to replace a defective robot. An example from disaster management is the use of multiple robots in a building damaged by an earthquake. In this scenario, each robot must perform tasks such as localization, path planning, object detection, grasping, collision avoidance, and exploration, among others. Most of these tasks are time-consuming, and robots that can perform these tasks by themselves are more expensive because they need enough computational power and memory to perform all these tasks. If we move some of the computation to the cloud or to intermediate processing units, the robots used can be cheaper. But not all tasks should be moved to the cloud or other intermediate processing units, for communication time reasons. Some are critical and can impact the safety of the robot, and those must be processed locally (collision avoidance is an example).

The invention solves the problem by simultaneously minimizing the memory usage by the robots and the time required for all the robots to obtain the results of all the algorithms required to perform each task.

## BRIEF DESCRIPTION OF DRAWINGS

With the purpose of promoting an understanding of the principles in accordance with the embodiments of the present invention, reference will be made to the embodiments illustrated in the figures and to the language used to describe the same. Anyway, it must be understood that there is no intention of limiting the scope of the present invention to the contents of the figures. Any alterations or later changes of the inventive features illustrated herein and any additional application of the principles and embodiments of the invention shown, which would occur normally for one skilled in the art when reading this description, are considered as being within the scope of the claimed invention.

Figure 1 - illustrates an input mode having the architecture as a text;
Figure 2 - illustrates a first embodiment of an input mode having the architecture as a Graphical User Interface (GUI);
Figure 3 - illustrates a second embodiment of an input mode having the architecture as a GUI;
Figure 4 - illustrates a third embodiment of an input mode having the architecture as a GUI;
Figure 5 - illustrates a fourth embodiment of an input mode having the architecture as a GUI;
Figure 6 - illustrates an input mode having algorithms as a text;
Figure 7 - illustrates a first embodiment of an input mode having algorithms as a GUI;
Figure 8 - illustrates a second embodiment of an input mode having algorithms as a GUI;
Figure 9 - illustrates a third embodiment of an input mode having algorithms as a GUI;
Figure 10 - illustrates an output mode;
Figure 11 - illustrates a report of an output mode;
Figure 12 - illustrates an overview of task allocation methods revealed in several references of the prior art.

## DESCRIPTION OF EMBODIMENTS

A user uses an input mode to design the most appropriate architecture of a networked robotic cloud system, wherein is carried out the computer-implemented method of optimal and secure algorithm allocation to processing units according to the present invention.

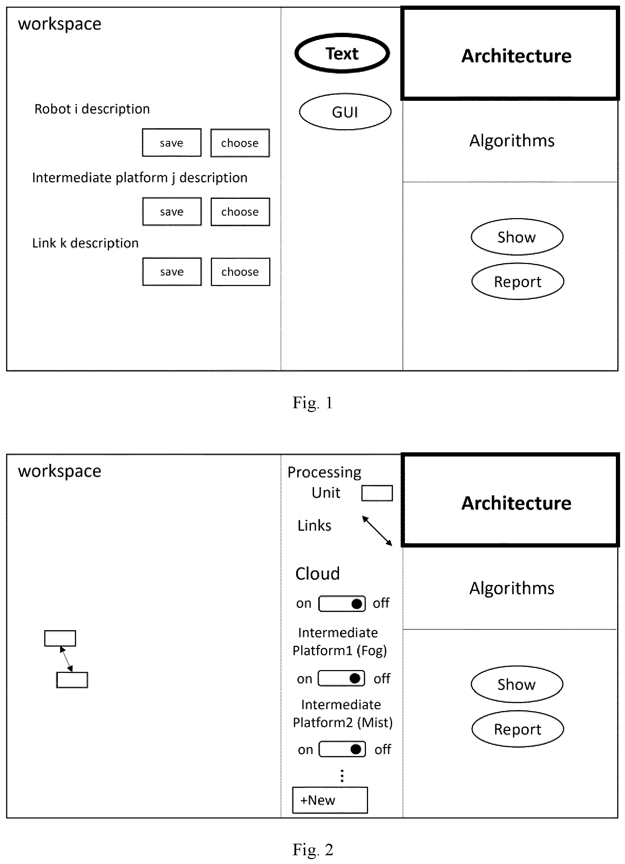

As illustrated in figure 1, by selecting a text mode, the user can write the description or specifications of processing units and their data transfer links, wherein it is possible to save the descriptions or choose from those already saved descriptions in order to execute the steps a) and b) of the computer-implemented method of optimal and secure algorithm allocation to processing units according to the invention.

In the preferred embodiments according to the present invention, the processing unit specification in step b) is selected from a group consisting of a nominal power consumption, a memory capacity, a storage capacity, a processing capacity, or an availability.

The inputs of the computer-implemented method of optimal and secure algorithm allocation to processing units are defined in the steps a) to e). The step a) can be considered as a GUI input or be constructed from steps b) and c). The step e) can be either an input, as a GUI, or constructed from step d). The step f) can be derived from step d) and/or step e). The step g) is derived from steps a) to f). The step h) is a predefined solution that is used to solve the problem statement in step g). Steps j) and k) report the solutions of step g). The step 1) takes the outputs of step d) and/or step e), as an input, and produce a report regarding security issues/highlights.

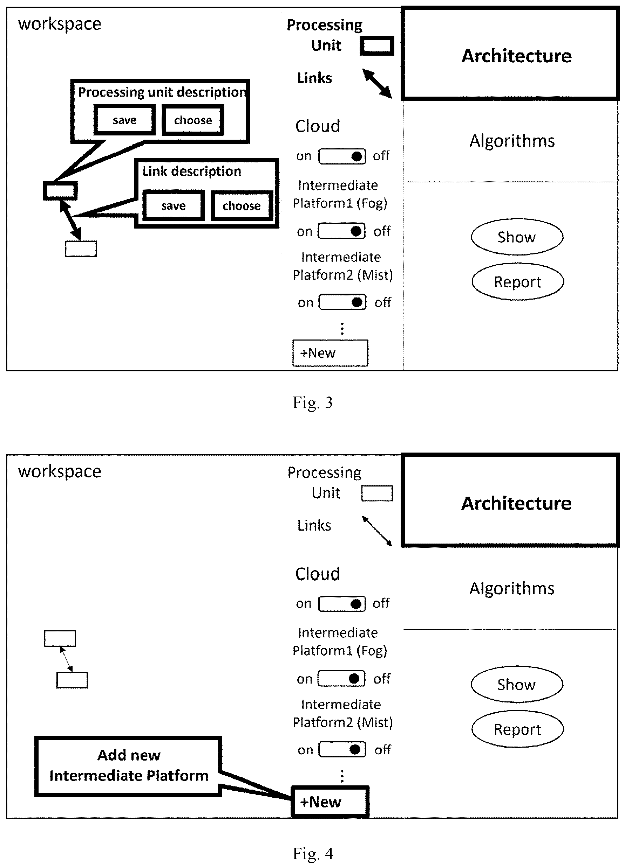

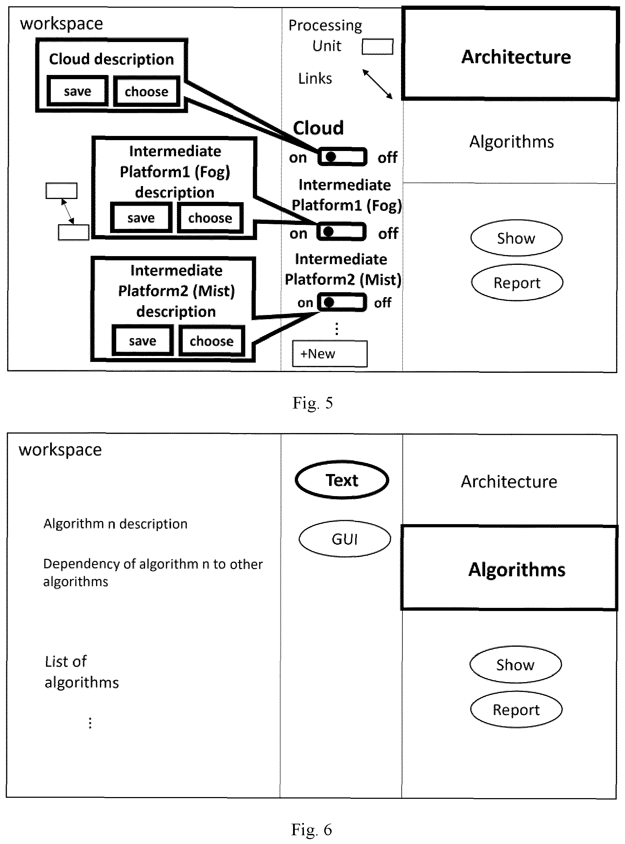

Alternatively to the embodiment referred in Figure 1, as illustrated in figure 2, it is possible to select a Graphical User Interface (GUI) mode, the user opens a new window, which allows the user to place processing units on the screen (workspace), move them around and design data transfer links between them. After placing a processing unit in the workspace, a window opens where the description or specification of the processing units can be entered, for example a memory capacity, a processing power, or additional constraints on the use of the processing unit, if any, such as the battery capacity of robots and capability to execute an algorithm, as illustrated in Figure 3. After placing a link in the workspace, a window opens in which the description or specifications of the data transfer links, for example a data transfer rate can be entered, as illustrated in Figure 3. Using a New button, as illustrated in Figure 4, it is possible to add intermediate processing and storage units such as a fog, a mist, a dev, or other intermediate platforms. In the preferred embodiments of the computer-implemented method of optimal and secure algorithm allocation to processing units according to the present invention, there are also switches for no cloud or no intermediate platforms options. If these switches are enabled, as illustrated in Figure 5, a new window opens asking for the description or specifications of the cloud or intermediate platforms, depending on which switch is enabled (storage capacity, processing power and, if any, some additional restrictions on the use of intermediate platforms and the cloud). The description or specifications of a data transfer link, an intermediate platform or a robot can be stored in a file by selecting a save button. The description or specifications of data transfer links and processing units can be selected from a predefined file, by selecting a choose button, as illustrated in Figures 3 and 5.

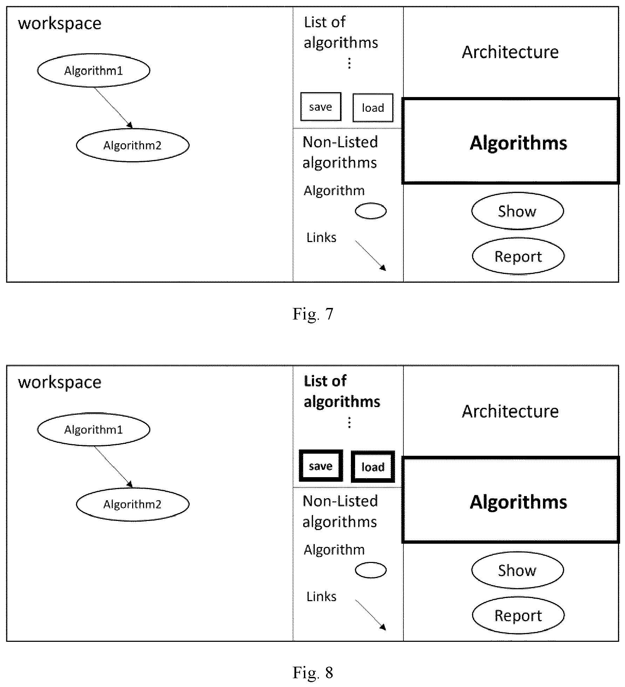

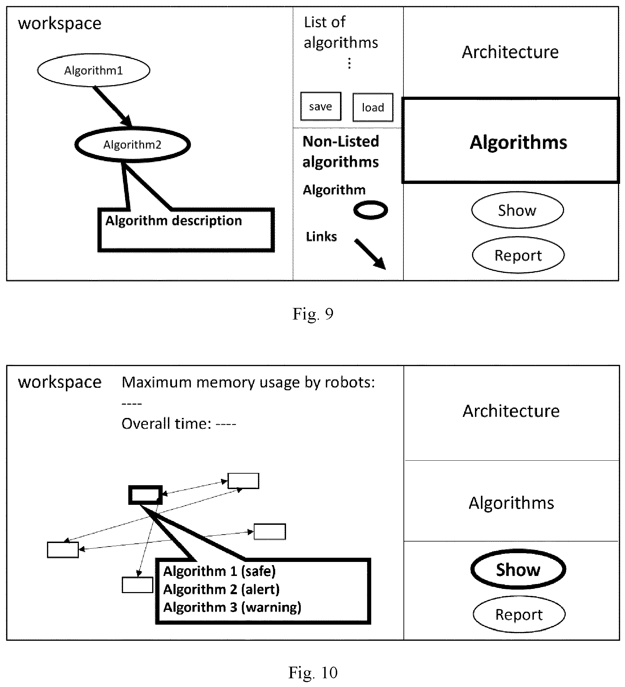

Then, the user uses the input mode or the algorithm window to design the algorithms and their dependencies. By selecting the text mode, Figure 6, the user can write the description or specifications of each algorithm or select an algorithm from the existing algorithms and their dependencies in order to execute the step d) of the computer-implemented method of optimal and secure algorithm allocation to processing units according to the present invention. Alternatively, selecting the GUI mode, it is opened a new window, as illustrated in Figure 7. In this menu, the user can choose from the list of algorithms or save the current list of algorithms, as illustrated in Figure 8. If an algorithm is not listed, the user can place the algorithm on the workspace and set the dependencies to the existing algorithms, where after placing an algorithm on the workspace, a window opens for entering the description or specifications of the algorithm, for example an input memory size, a processing memory usage, a space complexity, or an output memory usage, as illustrated in Figure 9. After entering the description of the algorithm, the algorithm immediately will be added to the list of algorithms. The list of algorithms can be loaded from a previously described list of algorithms stored in a file, by selecting the load button. The list of algorithms can also be stored in a file for future use, by selecting the save button, as illustrated in Figure 8.

In the preferred embodiments according to the present invention, the demanded algorithm specifications in step d) are selected from a group consisting of an optional process unit constraint, an input memory size, a processing memory usage, a space complexity, and an output memory usage.

In the preferred embodiments of the invention, after the introduction of the specifications of a plurality of demanded algorithms and their dependencies and the design of the architecture are completed, namely the feeding of a graph representing a cloud robotic network architecture comprising processing units and data transfer links and the specifications of a plurality of processing units, the user can switch to the output mode and choose between the report and the GUI. By selecting the show button, as illustrated in Figure 10, the designed architecture is displayed on the workspace along with the maximum memory consumption of the robots and the minimum overall time. When the user clicks on any node of the architecture, a new window opens displaying a list of all the algorithms associated with that specific node, as well as a list of the security aspects to be considered. When the user clicks on the report button, as illustrated in Figure 11, a table with the maximum memory consumption of the robots and the minimum overall time is displayed on the workspace, which is an example of the output of step k) of the computer-implemented method of optimal and secure algorithm allocation to processing units according to the present invention. Each column represents a particular node in the architecture and also shows the list of all algorithms associated with that particular node, as well as the list of security issues to consider. The table can be saved for later use and documentation. In the step 1) of the computer-implemented method of optimal and secure algorithm allocation to processing units according to the present invention, the security issues, as illustrated in Figures 10 and 11, can be divided into three classes:

- safe, no issues are detected;
- alert, major issues have been detected, such as publicly accessible camera images;
- warning, minor issues have been detected, such as the path a robot will take is publicly accessible.

Therefore, in the preferred embodiments of the invention, said security issue is selected from a group consisting of a safe alert or a warning.

As an exemplary result, illustrated in Figures 10 and 11, it is shown the optimal solution for algorithm allocation that provides the maximum possible profits by providing the fastest performance and minimum costs by providing the lowest memory usage.

In the preferred embodiments of the method according to the present invention, the robotic network key performance indexes are selected from a group consisting of an operational cost, a processing time, a memory usage, or a number of allocated workers.

The method according to the present invention uses, in its step g), one of the three optimization methods, which are described in the following detailed optimizations section, depending on the given descriptions or specifications respecting the execution of all demanded algorithm, the algorithm dependencies, the process unit specifications, and the data transferring time. As an example, if the user specifies only a description or specification of a time parameter, i.e., the user does not care about memory usage, a first optimization method is used to find the optimal execution time. If the user only provides a description or specification of the memory parameter, i.e., the user does not care about the execution time, a second optimization method is used to find the optimal memory usage. And finally, if the user describes both the memory usage and the time parameter, a third optimization method is used to find the optimal solution.

Therefore, the present invention presents a computer-implemented method of optimal and secure algorithm allocation to processing units.

Detailed Optimizations

Notations list:

- $t_i^s$ is the time when the algorithm $i$ started (start time).
- $t_i^f$ is the time when the execution of algorithm $i$ finished (response time).
- $V_n$ is the set of nodes of the cloud robotics architecture including all processing units.
- $x_{ik}$ indicates whether node $k$ in $V_n$ has an algorithm $i$ associated with it.
- nodes in $V_n$ are classified as nodes from the set of all edges E, fogs F, clouds C, and intermediate nodes I.
- the nodes $e$, $f$ and $c$, $int$, in $V_n$ denote the node from edge nodes, fog nodes, cloud nodes, and intermediate nodes, respectively.
- $V_t$ is the set of all algorithms in the graph of dependency of algorithms with additional virtual algorithms.
- $Z_{ik}$ is an indicator that an algorithm $i$ can be assigned to node $k$ in $V_n$, which can accomodate prior information about the places where algorithms need to be executed.
- $pred_i$ is the set of algorithms that must be executed before algorithm $i$ is executed (the set of all algorithms in the graph for which algorithm $i$ is their successor).
- $(k,l) \in E_n$ indicates that nodes $k$ and $l$ are neighbors in the cloud robotics architecture, and $E_n$ is the set of all neighbors.
- $S_{ji}$ is the size of the intermediate data obtained from algorithm j that must be transmitted to the node executing algorithm $i$ to be used as input to $i$.
- $R_{ik}$ is the runtime of algorithm $i$ on node k.

The following formulation is the optimization problem for minimizing the time:

$$\min: t^f = \sqrt{\sum_{e=1}^{E} (t_e^f)^2}$$

$$\text{s.t.:} \sum_{k \in V_n} x_{ik} = 1$$

$$x_{ik} \leq Z_{ik},$$

$$\forall i \in V_t, k \in V_n$$

$$1 \leq \sum_{k=1}^{E+C+F+I} Z_{ik} \leq E + C + F + I,$$

$$\forall i \in V_t$$

$$t_i^s = T_{1,i} + \sum_{k \in V_n} x_{ik} T_{2,i}^k,$$

$$\forall i \in V_t$$

$$T_{1,i} = \max_{j \in \mathrm{pred}_i} \left\{ t_j^f \left( \textstyle\sum_{p \in V_n} x_{jp} p \right) \right\},$$

$$\forall i \in V_t$$

$$T_{2,i}^k = \textstyle\sum_{j \in \mathrm{pred}_i} \mathrm{TransmissionTime}_k(S_{ji}),$$

$$\forall i \in V_t, k \in V_n$$

$$t_i^s \geq \max_{j \in V_t} \left\{ \textstyle\sum_{k \in V_n} x_{ik} x_{jk} y_{ij} \times \left( t_j^f \left( \textstyle\sum_{p \in V_n} x_{jp} p \right) \right) \right\},$$

$$\forall i \in V_t$$

$$t_i^f(p) = t_i^s + \sum_{k \in V_n} x_{ik} R_{ik} + \mathrm{TransmissionTime}_p(\mathrm{OutputSize}_i),$$

$$\forall i \in V_t$$

$$x_{ik}, y_{ij}, Z_{ik} \in \{0,1\},$$

where $t_j^f(e)$ is the response time of algorithm $j$ when initiated by edge node e E $E$, $Z_{ik}$, which can be 0 or 1, is an indicator of whether an algorithm $i$ can be assigned to a set of nodes, k being one of them, and cannot be assigned to the remaining nodes, $\mathrm{TransmissionTime}_k$ is the average time to transmit $S_{ji}$ data to node k, and $S_{ji}$ is any additional information that needs to be transmitted to $i$ as input of algorithm $i$ in addition to the information obtained in the previous step.

For an algorithm $A_i$, we describe the memory usage by algorithm $A_i$, with $m_{in}(A_i)$, $m_{pr}(A_i)$, and $m_{ou}(A_i)$ which are the total memory size of the input, processing, and output of algorithm $A_i$, respectively. By $m_{in}(A_i)|_{F \cup C \cup I}$, we mean the total size of data necessary to execute algorithm $A_i$ that is not included in the outputs of other algorithms allocated in the edge nodes, and this data is transmitted by some nodes in the fog, cloud or intermediate processing units, and $m_{in}(A_i)|_E$ is the complement of $m_{in}(A_i)|_{F \cup C \cup I}$. Since all edge nodes can send requests to execute any algorithm, $m_{ou}(A_i)$ must be considered in each edge node. Therefore, there must be a fixed amount of memory available in each edge node equal to the total memory required to store all algorithms' outputs, TotalOutput($A_i$).

If an algorithm $A_i$ is allocated to an edge node $R_j$, then the edge node $R_j$ must contain the processing and input memory of the algorithm $A_i$, that is, $m_{pr}(A_i)$ and $m_{in}(A_i)|_{F \cup C \cup I}$. Thus, for each edge node $R_j$, with j = 1, ..., k:

$$\mathrm{MemoryUsage}(R_j, \mathrm{AlgorithmAllocation}) =$$

$$\mathrm{TotalOutput}(A) + TM(R_j) + \textstyle\sum_{i=1}^n x_{i,j}\left( m_{pr}(A_i) + m_{in}(A_i) \right),$$

where $TM(R_j)$ is the size of the data transmitted to other nodes (some information such as a graph of the architecture, the node sending a request for an algorithm and the node that needs to execute the algorithm, etc.) and $x_{i,j}$ indicates whether an algorithm $i$ is assigned to the node $R_j$.

The goal is not only to minimize the total memory usage of the edge nodes with respect to AlgorithmAllocation (AlgorithmAllocation is defined as all possible algorithm allocations to all nodes of the robotic network cloud system, which can be defined as the set of all mappings $\pi$ from the set of all algorithms to the four types of nodes$\{E, F, C, I\}$), which can be formulated as

$$\min \quad \text{SumMemoryUsage(AlgorithmAllocation)} =$$

$$\sum_{i=1}^{k} \text{MemoryUsage}(R_i, \text{AlgorithmAllocation}),$$

but also to achieve that while maintaining equilibrium in memory usage,

$$\min \quad \sum_{i=1}^{k} (\text{MemoryUsage}(R_i, \text{AlgorithmAllocation}) -$$

$$\frac{\text{SumMemoryUsage(AlgorithmAllocation)}}{k})^2.$$

Detailed description of a preferred embodiment

The computer-implemented method of optimal and secure algorithm allocation to processing units, according to the invention, can be explained as follows:

- Inputs: The following information is needed:

    (a) List of algorithms {A_1,...,A_n};
    (b) Execution dependency of the algorithms;
    (c) Execution time of algorithms on all nodes of a cloud, a fog, an edge, and intermediate nodes;
    (d) Data transmission time between all nodes of the cloud, the fog, the edge, and intermediate nodes;
    (e) Input specification of algorithms, for example processing and output memory size of algorithms;
    (f) Additional specifications about algorithms, for example where to run them, wherein these additional specifications are optional, to account for known constraints;
    (g) Identify the classes of nodes on edge E, on cloud C, on fog F, and on intermediate nodes I.

Note that, the values for points (c) and (d) can be estimates, although the closer they are to the real values, the better the optimal and secure algorithm allocation to processing units will be.

- Outputs: The following outputs are provided:
  The mapping $\pi$:$\{A_1, ..., A_n\} \rightarrow \{E, F, C, I\}$ for algorithm allocation such that it gives the optimal overall time and memory. The mapping $\pi$ maps each algorithm to a corresponding node in either classes *E, F, I*, and C.

- **Steps: The following steps should be followed:**

    (1) Construct the graph of algorithms, G, and its respective semi-lattice $\mathcal{SL}$ (G), see [1];
    (2) Find the set of all execution flows, (the set of all paths in $\mathcal{SL}$ (G)) ExecutionFlows(*G*);
    (3) Make a guess on the optimal allocation algorithms and find its overall time Time and memory Memory;
    (4) Apply the branch and bound algorithm to the elements of
    ExecutionFlows(*G*), one at a time as follows. Note that allocation of **1** and **0** are on the same edge node, and for the other algorithms, it is on a subset of *{E, F, C, I}* (the subset because with the prior information about the algorithms, we might be able to remove some nodes from at least one of the classes *of E, F, I*, and C. The number of branches is equal to the number of nodes in all classes):

    (i). Apply the algebra of time [1] to the subterms of ExecutionFlows(G) induced by considering the algorithms already allocated in the previous steps, and find the partial overall time, $\text{Time}_1$. And apply the algebra of memory [1] to the subterms of ExecutionFlows(G) induced by considering algorithms already allocated in previous steps and find the partial overall memory, $\text{Memory}_1$.
    (ii). Compare the results of the previous step with the guessed optimal solution. If the distance to the origin is higher, i.e.,

$$\sqrt{(\text{Memory}_1/\text{Memory})^2 + (\text{Time}_1/\text{Time})^2} > \sqrt{2},$$

then stop the branching. And if it is less or equal, proceed to the next algorithm;

(iii). If all algorithms are allocated, and the distance to the origin is less than the guessed optimal solution, i.e.,

$$\sqrt{(\text{Memory}_1/\text{Memory})^2 + (\text{Time}_1/\text{Time})^2} < \sqrt{2},$$

then update the guess on the optimal allocation algorithms with the current overall time and memory and proceed to the next possible branch.

(5) The updated guess on the optimal allocation after completing the previous steps is the optimal allocation.

The preceding method is similar to the method in the prior art reference [1] and the differences are that here the number of branches is the number of nodes and it is assumed to be at least 3 (we consider architectures with at least 3 nodes instead of with exactly 3 nodes). The pseudocode of the algorithm is shown in Algorithm 1. Also, when evaluating the time parameter, we first obtain several values that will be the set of time values for each edge node, taking into account their distances to the origin in the hyperspace of the edge nodes' time values. Moreover, for the particular case in which we want to find the optimal memory usage by robots, a simpler solution is formulated and described in the section memory optimization.

An exemplary optimal algorithm allocation minimizing time and memory is illustrated in table 1.

Table 1: exemplary optimal algorithm allocation minimizing time and memory

---

**Algorithm 1** Optimal algorithm allocation minimizing time and memory

1: **procedure** $(\text{ExecutionFlows}(G), \text{Archi.}(E, F, C, I))$
2:     $\text{Map} \leftarrow \{(A, x) \mid A \in G, x \in E \cup F \cup C \cup I\}$
3:     Allocate all algorithms to a fog node $f \in F$ and evaulate $M \leftarrow Memory(G,f)$ and $T \leftarrow Time(G,f)$.                 $\triangleright$ Use algebra of memory and time in [2]
4:     $h \leftarrow max\{\text{height}(e) \mid e \in \text{ExecutionFlows}(G)\}$.     $\triangleright$ height of a path is the number of vertices of the path.
5:     **for** $l := h$ to $1$ **do**
6:         $\mathcal{A} \leftarrow \{A \mid A \text{ is a node of height } l \text{ of } e, e \in \text{ExecutionFlows}(G)\}$.
7:         $\text{TempMap} \leftarrow \{(A, x) \mid A \in \mathcal{A}, x \in E \cup F \cup C \cup I\}$                 $\triangleright$ Branching Algorithms.
8:         **for** $X \in \text{TempMap}$ **do**
9:             $M_1 \leftarrow PartialMemory(X, \text{TempMap})$ and $T_1 \leftarrow PartialTime(X, \text{TempMap})$         $\triangleright$ Use algebra of memory and time in [2] to obtain partial memory usage and time for $X$ given the allocation TempMap
10:             **if** $\sqrt{(M_1/M)^2 + (T_1/T)^2} > \sqrt{2}$ **then**                 $\triangleright$ Bounding.
11:                 $\text{TempMap} \leftarrow \text{TempMap} \smallsetminus \{X\}$
12:         $\text{Map} \leftarrow \text{Map} \cap \text{TempMap}$
13:     **return** Map

---

The detailed description of the branch and bound algorithm can be found in prior art reference [13].

Security issues are measured by how much sensitive information from hard drive, location, camera feeds, and so on are accessible from executing an algorithm. An algorithm accessing and sharing directly these informations will be reported as a high security risk. An algorithm accessing and sharing partial information will be reported as a medium security risk.

In other preferred embodiments of the method according to the present invention, the said overall operation performance defined for optimization problem in step g) consists of a total execution time, a memory usage equilibrium, or a combination of total execution time and memory usage equilibrium.

In other embodiments according to the present invention, the method in step i) consists on an application of the branch and bound algorithm to the elements of a set of all execution flows (paths) in the semilattice of the graph of algorithms constructed in steps f) and g).

In the preferred embodiments of the method according to the present invention, the input feeding of steps a) to e) is obtained by an automatically and programmatically request from processing units and/or from performance tests.

In the preferred embodiments of the method according to the present invention, the processing unit is a computational device with computing power that can communicate with the robot, such as a server, a laptop, a cell phone, or a personal computer.

In the preferred embodiments of the computer program according to the present invention, the data input and data output is made by a graphical user interface or a command line interface.

As used in this description, the expressions "about" and "approximately" refer to a range in values of roughly 10% the specified number.

As used in this description, the expression. "substantially" means that the real value is within an interval of about 10% of the desired value, variable or related limit, particularly within about 5% of the desired value, variable or related limit or particularly within about 1% of the desired value, variable or related limit.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B.

In addition, the articles "a" and "an" as used in this application and the appended claims should generally be construed to mean "one or more" unless specified otherwise or clear from the context to be directed to a singular form.

Further, as used herein, the term "exemplary" is intended to mean serving as an illustration or example of something and is not intended to indicate a preference.

The subject matter described above is provided as an illustration of the present invention and must not be interpreted to limit it. The terminology used with the purpose of describing specific embodiments, according to the present invention, must not be interpreted to limit the invention. As used in this description, the definite and indefinite articles, in their singular form, aim to include in the interpretation the plural forms, unless the context of the description explicitly indicates the contrary. It will be understood that the expressions "comprise" and "include", when used in this description, specify the presence of the characteristics, the elements, the components, the steps and the related operations, but do not exclude the possibility of other characteristics, elements, components, steps and operations from being also contemplated.

All modifications, providing that they do not modify the essential features of the following claims, must be considered within the scope of protection of the present invention.

**Citation List**

Non Patent Literature.

[1] Saeid Alirezazadeh and Luis A. Alexandre. Optimal algorithm allocation for single robot cloud systems. IEEE Transactions on Cloud Computing, pages 1-13, 2021.

[2] Saeid Alirezazadeh and Luis A. Alexandre. Dynamic task allocation for robotic network cloud systems. In 2020 IEEE Intl Conf on Parallel Distributed Processing with Applications, Big Data Cloud Computing, Sustainable Computing Communications, Social Computing Networking (ISPA/BDCloud/SocialCom/SustainCom), pages 1221-1228, 2020.

[3] Flavio Bonomi, Rodolfo Milito, Jiang Zhu, and Sateesh Addepalli. Fog computing and its role in the internet of things. In Proceedings of the First Edition of the MCC Workshop on Mobile Cloud Computing, MCC-12, pages 13-16, New York, NY, USA, 2012. Association for Computing Machinery.

[4] A. Botta, L. Gallo, and G. Ventre. Cloud, fog, and dew robotics: Architectures for next generation applications. In 2019 7th IEEE International Conference on Mobile Cloud Computing, Services, and Engineering (MobileCloud), pages 16-23, April 2019.

[5] W. Chen, Y. Yaguchi, K. Naruse, Y. Watanobe, K. Nakamura, and J. Ogawa. A study of robotic cooperation in cloud robotics: Architecture and challenges. IEEE Access, 6:36662-36682, 2018.

[6] Xinye Chen, Ping Zhang, Guanglong Du, and Fang Li. A distributed method for dynamic multi-robot task allocation problems with critical time constraints. Robotics and Autonomous Systems, 118:31 - 46, 2019.

[7] Zhihui Du, Ligang He, Yinong Chen, Yu Xiao, Peng Gao, and Tongzhou Wang. Robot cloud: Bridging the power of robotics and cloud computing. Future Generation Computer Systems, 74:337 - 348, 2017.

[8] S. Geng, D. Wu, P. Wang, and X. Cai. Many-objective cloud task scheduling. IEEE Access, 8:79079-79088, 2020.

[9] M. C. Gombolay, R. J. Wilcox, and J. A. Shah. Fast scheduling of robot teams performing tasks with temporospatial constraints. IEEE Transactions on Robotics, 34(1):220-239, 2018.

[10] B. D. Gouveia, D. Portugal, D. C. Silva, and L. Marques. Computation sharing in distributed robotic systems: A case study on slam. IEEE Transactions on Automation Science and Engineering, 12(2):410-422, 2015.

[11] S. Li, Z. Zheng, W. Chen, Z. Zheng, and J. Wang. Latency-aware task assignment and scheduling in collaborative cloud robotic systems. In 2018 IEEE 11th International Conference on Cloud Computing (CLOUD), pages 65-72, July 2018.

Chi-Fang Lin and Wen-Hsiang Tsai. Optimal assignment of robot tasks with precedence for muliti-robot coordination by disjunctive graphs and state-space search. Journal of Robotic Systems, 12(4):219-236, 1995.

Miten Mistry, Dimitrios Letsios, Gerhard Krennrich, Robert M. Lee, and Ruth Misener. Mixed-integer convex nonlinear optimization with gradient-boosted trees embedded, 2018.

Seyedakbar Mostafavi and Vesal Hakami. A stochastic approximation approach for foresighted task scheduling in cloud computing. Wireless Personal Communications, 114(1):901-925, Sep 2020.

Yuvraj Sahni, Jiannong Cao, Lei Yang, and Yusheng Ji. Multihop offloading of multiple dag tasks in collaborative edge computing. IEEE Internet of Things Journal, 8(6):4893-4905, 2021.

Philipp Schillinger, Mathias Bürger, and Dimos V. Dimarogonas. Simultaneous task allocation and planning for temporal logic goals in heterogeneous multi-robot systems. The International Journal of Robotics Research, 37(7):818-838, 2018.

W. Shi, J. Cao, Q. Zhang, Y. Li, and L. Xu. Edge computing: Vision and challenges. IEEE Internet of Things Journal, 3(5):637-646, Oct 2016.

Lin-Yu Tseng and Shyi-Ching Liang. A hybrid metaheuristic for the quadratic assignment problem. Computational Optimization and Applications, 34(1):85- 113, May 2006.

N. Tsiogkas and D. M. Lane. An evolutionary algorithm for online, resourceconstrained, multivehicle sensing mission planning. IEEE Robotics and Automation Letters, 3(2):1199-1206, 2018.

Hanfu Wang, Weidong Chen, and Jingchuan Wang. Coupled task scheduling for heterogeneous multi-robot system of two robot types performing complexschedule order fulfillment tasks. Robotics and Autonomous Systems, page 103560, 2020.

L. Wang, M. Liu, and M. Q.. Meng. A hierarchical auction-based mechanism for real-time resource allocation in cloud robotic systems. IEEE Transactions on Cybernetics, 47(2):473-484, 2017.

P. Zhang and M. Zhou. Dynamic cloud task scheduling based on a twostage strategy. IEEE Transactions on Automation Science and Engineering, 15(2):772-783, 2018.

**Claims**

1. A computer-implemented method of optimal and secure algorithm allocation to processing units **characterized by** the fact that comprises the following steps:

a) feeding a graph representing a cloud robotic network architecture comprising processing units and data transfer links;

b) feeding the specifications of a plurality of processing units, wherein said processing units are selected from a group comprising a node in the edge, a node in the cloud, an intermediate node or a node in the fog;

c) feeding the specifications of a data transfer speed between each processing unit;

d) feeding the specifications of a plurality of demanded algorithms and their dependencies;

e) construction of a graph representing algorithms and their sequence;

f) finding a set of all execution flows (paths);

g) definition of a Mixed Integer Nonlinear Programming (MINLP) optimization problem in which the objective function measures the overall operation performance respecting the execution of all demanded algorithm, the algorithm dependencies, the process unit specifications, and the data transferring time;

h) feeding an initial estimate of a mapping between algorithms and processing units;

i) executing a method to solve the optimization problem defined in step g;

j) reporting an optimal mapping between algorithms and processing units;

k) reporting robotic network key performance indexes;

l) reporting security issues/highlights.

2. The computer-implemented method, according to claim 1, wherein said processing unit specification in step b) is selected from a group consisting of a nominal power consumption, a memory capacity, a storage capacity, a processing capacity, or an availability.

3. The computer-implemented method, according to any of claims 1 or 2, wherein said demanded algorithm specifications in step d) are selected from a group consisting of an optional process unit constraint, an input memory size, a processing memory usage, a space complexity, and an output memory usage.

4. The computer-implemented method, according to any of claims 1 to 3, wherein the said overall operation performance defined for optimization problem in step g) consists of a total execution time, a memory usage equilibrium, or a combination of total execution time and memory usage equilibrium.

5. The computer-implemented method, according to any of claims 1 to 4, wherein said method in step i) consists on an application of the branch and bound algorithm to the elements of a set of all execution flows (paths) in the semilattice of the graph of algorithms constructed in steps f) and g).

6. The computer-implemented method, according to any of claims 1 to 5, wherein said robotic network key performance indexes are selected from a group consisting of an operational cost, a processing time, a memory usage, or a number of allocated workers.

7. The computer-implemented method, according to any of claims 1 to 6, wherein said security issue is selected from a group consisting of a safe alert or a warning.

8. The computer-implemented method, according to any of claims 1 to 7, wherein the input feeding of steps a) to e) is obtained by an automatically and programmatically request from processing units and/or from performance tests.

9. The computer-implemented method, according to any of claims 1 to 8, wherein the processing unit is a computational device with computing power that can communicate with the robot, such as a server, a laptop, a cell phone, or a personal computer.

10. A computer program, **characterized by** comprising instructions which, when the program is executed by a computer, cause the computer to carry out the steps of the method defined in any of claims 1 to 9.

11. The computer program, according to claim 10, wherein the data input and data output is made by a graphical user interface or a command line interface.

12. A computer-readable data carrier **characterized by** having stored thereon the computer program, as defined in any of claims 10 to 11.

| workspace | | |
|---|---|---|
| | Text | **Architecture** |
| Robot i description | GUI | |
| save | choose | Algorithms |
| Intermediate platform j description | | |
| save | choose | Show |
| Link k description | | Report |
| save | choose | |

Fig. 1

| workspace | Processing Unit | **Architecture** |
|---|---|---|
| | Links | |
| | Cloud | |
| | on ● off | Algorithms |
| | Intermediate Platform1 (Fog) | |
| | on ● off | Show |
| | Intermediate Platform2 (Mist) | Report |
| | on ● off | |
| | ⋮ | |
| | +New | |

Fig. 2

workspace

Processing
Unit

Links

**Architecture**

Processing unit description

save   choose

Link description

save   choose

Cloud

on ● off

Intermediate
Platform1 (Fog)

on ● off

Intermediate
Platform2 (Mist)

on ● off

⋮

+New

Algorithms

Show

Report

Fig. 3

workspace

Processing
Unit

Links

**Architecture**

Cloud

on ● off

Intermediate
Platform1 (Fog)

on ● off

Intermediate
Platform2 (Mist)

on ● off

⋮

**Add new
Intermediate Platform**

**+New**

Algorithms

Show

Report

Fig. 4

## Fig. 5

| workspace | Processing Unit | |
|---|---|---|
| **Cloud description** [save] [choose] | Links | **Architecture** |
| **Intermediate Platform1 (Fog) description** [save] [choose] | **Cloud** on [●] off **Intermediate Platform1 (Fog)** on [●] off | Algorithms |
| **Intermediate Platform2 (Mist) description** [save] [choose] | **Intermediate Platform2 (Mist)** on [●] off ⋮ +New | (Show) (Report) |

Fig. 5

## Fig. 6

| workspace | | Architecture |
|---|---|---|
| | **Text** | |
| Algorithm n description | (GUI) | **Algorithms** |
| Dependency of algorithm n to other algorithms | | |
| List of algorithms ⋮ | | (Show) (Report) |

Fig. 6

| workspace | List of algorithms ⋮ | Architecture |
|---|---|---|
| Algorithm1 → Algorithm2 | save │ load | **Algorithms** |
| | Non-Listed algorithms | |
| | Algorithm ⬭ | Show |
| | Links ↘ | Report |

Fig. 7

| workspace | **List of algorithms** ⋮ | Architecture |
|---|---|---|
| Algorithm1 → Algorithm2 | **save** │ **load** | **Algorithms** |
| | Non-Listed algorithms | |
| | Algorithm ⬭ | Show |
| | Links ↘ | Report |

Fig. 8

Fig. 9

Fig. 10

| workspace | | | | Architecture |
|---|---|---|---|---|
| **Robot i** | ⋯ | **Fog i** | **Cloud i** | |
| Algorithm 1 (safe) Algorithm 2 (warning) Algorithm 3 (alert) | | Algorithm A (safe) Algorithm B (warning) Algorithm C (alert) | Algorithm X (safe) Algorithm Y (warning) Algorithm Z (alert) | Algorithms |
| Maximum memory usage by robots: ---- Overall time: ---- | | | **Save** | Show **Report** |

Fig. 11

Task allocation problem: $T = \{A_1, \ldots, A_m\}$ and $(T_i)_{i \in \mathbb{N}} = T_1, T_2, \ldots, \subseteq T$

Dynamic: Optimal performance for allocating $(T_i)_{i \in \mathbb{N}}$, [2]

Static: Optimal performance for allocating $T$

Multi-robot, simultaneously time and memory optimization (the computer-implemented method)

Centralized: Central unit provides task allocation, [9]

Distributed: tasks disperse to all robots, and robots decide whether to perform tasks or not

Multi-robot, time optimization [11]

Single robot, simultaneously time and memory optimization [1]

Behavior-based, [5]

Market-based, [21]

Combinatorial optimization-based, [8]

Evolutionary algorithm-based, [19]

Machine learning, [14]

Fig. 12

Europäisches
Patentamt

European
Patent Office

Office européen
des brevets

# EUROPEAN SEARCH REPORT

Application Number

EP 22 16 7296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAEID ALIREZAZADEH ET AL: "Optimal Algorithm Allocation for Robotic Network Cloud Systems", ARXIV.ORG, CORNELL UNIVERSITY LIBRARY, 201 OLIN LIBRARY CORNELL UNIVERSITY ITHACA, NY 14853, 26 April 2021 (2021-04-26), XP081944160, * the whole document * | 1-12 | INV. G06F9/50 |
| X | SAEID ALIREZAZADEH ET AL: "Optimal Algorithm Allocation for Robotic Network Cloud Systems", ARXIV.ORG, CORNELL UNIVERSITY LIBRARY, 201 OLIN LIBRARY CORNELL UNIVERSITY ITHACA, NY 14853, 22 December 2021 (2021-12-22), XP091109263, * the whole document * | 1-12 | |
| X | LI SHENGHUI ET AL: "Latency-Aware Task Assignment and Scheduling in Collaborative Cloud Robotic Systems", 2018 IEEE 11TH INTERNATIONAL CONFERENCE ON CLOUD COMPUTING (CLOUD), IEEE, 2 July 2018 (2018-07-02), pages 65-72, XP033399820, DOI: 10.1109/CLOUD.2018.00016 [retrieved on 2018-09-07] * the whole document * | 1-12 | TECHNICAL FIELDS SEARCHED (IPC) G06F |

The present search report has been drawn up for all claims

| Place of search | Date of completion of the search | Examiner |
|---|---|---|
| The Hague | 19 August 2022 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAEID ALIREZAZADEH ; LUIS A. ALEXANDRE.** Optimal algorithm allocation for single robot cloud systems. *IEEE Transactions on Cloud Computing,* 2021, 1-13
- **SAEID ALIREZAZADEH ; LUIS A. ALEXANDRE.** Dynamic task allocation for robotic network cloud systems. *2020 IEEE Intl Conf on Parallel Distributed Processing with Applications, Big Data Cloud Computing, Sustainable Computing Communications, Social Computing Networking (ISPA/BDCloud/SocialCom/SustainCom),* 2020, 1221-1228
- **FLAVIO BONOMI ; RODOLFO MILITO ; JIANG ZHU ; SATEESH ADDEPALLI.** Fog computing and its role in the internet of things. *Proceedings of the First Edition of the MCC Workshop on Mobile Cloud Computing, MCC-12,* 2012, 13-16
- **A. BOTTA ; L. GALLO ; G. VENTRE.** Cloud, fog, and dew robotics: Architectures for next generation applications. *2019 7th IEEE International Conference on Mobile Cloud Computing, Services, and Engineering (MobileCloud),* April 2019, 16-23
- **W. CHEN ; Y. YAGUCHI ; K. NARUSE ; Y. WATANOBE ; K. NAKAMURA ; J. OGAWA.** A study of robotic cooperation in cloud robotics: Architecture and challenges. *IEEE Access,* 2018, vol. 6, 36662-36682
- **XINYE CHEN ; PING ZHANG ; GUANGLONG DU ; FANG LI.** A distributed method for dynamic multi-robot task allocation problems with critical time constraints. *Robotics and Autonomous Systems,* 2019, vol. 118, 31-46
- **ZHIHUI DU ; LIGANG HE ; YINONG CHEN ; YU XIAO ; PENG GAO ; TONGZHOU WANG.** Robot cloud: Bridging the power of robotics and cloud computing. *Future Generation Computer Systems,* 2017, vol. 74, 337-348
- **S. GENG ; D. WU ; P. WANG ; X. CAI.** Many-objective cloud task scheduling. *IEEE Access,* 2020, vol. 8, 79079-79088
- **M. C. GOMBOLAY ; R. J. WILCOX ; J. A. SHAH.** Fast scheduling of robot teams performing tasks with temporospatial constraints. *IEEE Transactions on Robotics,* 2018, vol. 34 (1), 220-239
- **B. D. GOUVEIA ; D. PORTUGAL ; D. C. SILVA ; L. MARQUES.** Computation sharing in distributed robotic systems: A case study on slam. *IEEE Transactions on Automation Science and Engineering,* 2015, vol. 12 (2), 410-422

- **S. LI ; Z. ZHENG ; W. CHEN ; Z. ZHENG ; J. WANG.** Latency-aware task assignment and scheduling in collaborative cloud robotic systems. *2018 IEEE 11th International Conference on Cloud Computing (CLOUD),* July 2018, 65-72
- **CHI-FANG LIN ; WEN-HSIANG TSAI.** Optimal assignment of robot tasks with precedence for muliti-robot coordination by disjunctive graphs and state-space search. *Journal of Robotic Systems,* 1995, vol. 12 (4), 219-236
- **MITEN MISTRY ; DIMITRIOS LETSIOS ; GERHARD KRENNRICH ; ROBERT M. LEE ; RUTH MISENER.** *Mixed-integer convex nonlinear optimization with gradient-boosted trees embedded,* 2018
- **SEYEDAKBAR MOSTAFAVI ; VESAL HAKAMI.** A stochastic approximation approach for foresighted task scheduling in cloud computing. *Wireless Personal Communications,* September 2020, vol. 114 (1), 901-925
- **YUVRAJ SAHNI ; JIANNONG CAO ; LEI YANG ; YUSHENG JI.** Multihop offloading of multiple dag tasks in collaborative edge computing. *IEEE Internet of Things Journal,* 2021, vol. 8 (6), 4893-4905
- **PHILIPP SCHILLINGER ; MATHIAS BÜRGER ; DIMOS V. DIMAROGONAS.** Simultaneous task allocation and planning for temporal logic goals in heterogeneous multi-robot systems. *The International Journal of Robotics Research,* 2018, vol. 37 (7), 818-838
- **W. SHI ; J. CAO ; Q. ZHANG ; Y. LI ; L. XU.** Edge computing: Vision and challenges. *IEEE Internet of Things Journal,* October 2016, vol. 3 (5), 637-646
- **LIN-YU TSENG ; SHYI-CHING LIANG.** A hybrid metaheuristic for the quadratic assignment problem. *Computational Optimization and Applications,* vol. 34 (1), 85-113
- **N. TSIOGKAS ; D. M. LANE.** An evolutionary algorithm for online, resourceconstrained, multivehicle sensing mission planning. *IEEE Robotics and Automation Letters,* 2018, vol. 3 (2), 1199-1206
- **HANFU WANG ; WEIDONG CHEN ; JINGCHUAN WANG.** Coupled task scheduling for heterogeneous multi-robot system of two robot types performing complexschedule order fulfillment tasks. *Robotics and Autonomous Systems,* 2020, 103560

- **L. WANG ; M. LIU ; M. Q.. MENG.** A hierarchical auction-based mechanism for real-time resource allocation in cloud robotic systems. *IEEE Transactions on Cybernetics,* 2017, vol. 47 (2), 473-484

- **P. ZHANG ; M. ZHOU.** Dynamic cloud task scheduling based on a twostage strategy. *IEEE Transactions on Automation Science and Engineering,* 2018, vol. 15 (2), 772-783